# EUROPÄISCHE PATENTSCHRIFT

(11) **EP 1 153 241 B1**
(45) Veröffentlichungstag und Bekanntmachung des Hinweises auf die Patenterteilung: **22.08.2007**
(21) Anmeldenummer: 00989771.1
(22) Anmeldetag: 14.11.2000
(51) Int. Cl.: F21V 9/02, F21S 19/00, B60Q 3/02, F21V 33/00

(54) **FLACHE BELEUCHTUNGSVORRICHTUNG**
FLAT ILLUMINATION DEVICE
DISPOSITIF D'ECLAIRAGE PLAT

(30) Priorität: 13.12.1999 DE 19960053
(43) Veröffentlichungstag der Anmeldung: 14.11.2001
(73) Patentinhaber: Patent-Treuhand-Gesellschaft für elektrische Glühlampen mbH, 81543 München (DE)
(72) Erfinder: EBERHARDT, Angela, 86157 Augsburg (DE); CUSTODIS, Udo, 80637 München (DE); SEIBOLD, Michael, 81249 München (DE); ILMER, Michael, 86150 Augsburg (DE)
(86) Internationale Anmeldenummer: PCT/DE2000/003968
(87) Internationale Veröffentlichungsnummer: WO 2001/044717

(56) Entgegenhaltungen:
- FR-A- 2 046 558
- FR-A- 2 738 783
- GB-A- 2 126 328
- US-A- 5 589 730

## Beschreibung

### Technisches Gebiet

Die Erfindung betrifft eine flache Beleuchtungsvorrichtung.

Es handelt sich um eine Beleuchtungsvorrichtung zum Beleuchten von Räumen in Gebäuden. Dabei sind verschiedene Aspekte wie beispielsweise die gewünschte Lichtstärkeverteilung im Raum, die Farbtemperatur des Lichtes, aber auch architektonische sowie wirtschaftliche Aspekte zu berücksichtigen. Außerdem wird aus physiologischen und wirtschaftlichen Gründen das Tageslicht in die Lichtplanung von Gebäuderäumen üblicherweise mit einbezogen.

### Stand der Technik

Für die Beleuchtung von Gebäuderäumen wird in der Regel das Tageslicht mit Hilfe von Fenstern genutzt. Durch geschickte Auswahl der Größe und Anzahl der Fenster kann bei guten Tageslichtverhältnissen unter Umständen auf künstliche Lichtquellen verzichtet werden. Zumindest bei ungünstigen Tageslichtverhältnissen sowie bei Dunkelheit sind für die Innenraumbeleuchtung künstliche Lichtquellen unverzichtbar. Bisher wurde das Problem so gelöst, daß - zusätzlich zu dem oder den Fenstern für die Nutzung des Tageslichts - innerhalb des Raumes weitere Lichtquellen, z.B. elektrische Lampen, Kerzen, Lichtleiter etc. vorgesehen sind. Nachteilig ist unter anderem, daß sich die Lichtstärkeverteilung innerhalb des Raumes beim Wechsel von Tageslicht- zur Kunstlichtbeleuchtung ändert.

Das Dokument FR-A-2 046 558 offenbart eine flache Beleuchtungsvorrichtung, bei der eine längliche Lampe beispielsweise spiralförmig oder mäanderförmig zwischen zwei Glasplatten angeordnet ist.

Das Dokument GB-A-2 126 328 offenbart eine Signallampe, insbesondere für die Verwendung in Fahrzeugen. Die Signallampe ist aus optoelektronischen Bauteilen aufgebaut, die eine flache Einheit bilden. Die Signallampe ist an einer Scheibe befestigt, z.B. an der Innenseite eines Fahrzeugfensters oder eines Verbundglasfensters.

Das Dokument FR-A-2 738 783 offenbart eine streifenförmige Leucht- und Signalvorrichtung für das Rückfenster eines Fahrzeugs. Zu diesem Zweck sind zwischen zwei Glasteilen Hohlräume vorgesehen, in die Leuchtdioden oder Gasentladungslampen eingesetzt sind.

### Darstellung der Erfindung

Es ist Aufgabe der vorliegenden Erfindung, den Nachteil des Standes der Technik zu umgehen und eine zu diesem Zweck verbesserte Beleuchtungsvorrichtung bereitzustellen.

Diese Aufgabe wird durch die Verwendung einer flachen Beleuchtungsvorrichtung mit den Merkmalen des Anspruchs 1 gelöst. Besonders vorteilhafte Ausgestaltungen finden sich in den abhängigen Ansprüchen.

Der Grundgedanke der Erfindung besteht darin, das Tageslicht und das Kunstlicht für die Raumbeleuchtung in einer einzigen flachen Beleuchtungsvorrichtung zu integrieren. Vereinfacht gesagt kann die Realisierung dieses Grundgedankens in der geeigneten Modifikation einer Flachlampe gesehen werden derart, daß diese auch als Fenster verwendet werden kann, oder auch umgekehrt betrachtet, in der geeigneten Modifikation eines Fensters derart, daß dieses auch als Lampe funktioniert.

Dabei ist die erfindungsgemäße Verwendung der Beleuchtungsvorrichtung nicht auf die mögliche Nutzung von Tageslicht im strengen Sinne beschränkt, d.h. auf die Ausgestaltung in Form einer "Außenfenster"-Beleuchtungsvorrichtung, sondern diese sei hier nur als besonders interessante Variante herausgestellt. Vielmehr ist auch die zusätzliche Nutzung anderer Lichtquellen zur Hinterleuchtung der Beleuchtungsvorrichtung von Interesse, beispielsweise in Form einer "Innenfenster"-Beleuchtungsvorrichtung eines Raumteilers, wodurch sich gegebenenfalls das Licht des angrenzenden Raumes mit nutzen läßt.

Wesentlich im Sinne der Erfindung ist nur, daß die Beleuchtungsvorrichtung sowohl für das Licht der Hinterleuchtungsquelle, z.B. Tageslicht, Umgebungslicht transparente Bereiche aufweist, durch die gegebenenfalls das Tages- oder allgemeiner Hintergrundlicht hindurchtreten kann, als auch Bereiche aufweist, die aufgrund einer oder mehrerer innerhalb der Beleuchtungsvorrichtung integrierter künstlicher Lichtquellen leuchten.

Zu diesem Zweck weist die erfindungsgemäß verwendete flache Beleuchtungsvorrichtung zwei einander gegenüberliegende zumindest teilweise transparente ausgedehnte Sichtflächen auf sowie mindestens eine integrierte Lichtquelle, beispielsweise eine flache Leuchtstofflampe. Die bzw. jede elektrische Lichtquelle ist derart ausgebildet und angeordnet, daß durch diese eine entsprechende Leuchtfläche innerhalb zumindest einer der beiden Sichtflächen definiert ist. An die bzw. jede Leuchtfläche grenzt jeweils ein transparenter Teil der Sichtfläche an. Durch den verwendeten Begriff "transparent" soll die Erfindung als soweit verallgemeinert verstanden werden, daß damit sowohl durchsichtige, d.h. glasklare, als auch nur durchscheinende, beispielsweise matte oder trübe Materialien für die genannten Bereiche umfaßt sind. Wesentlich ist nur, daß zumindest ein Teil des Lichts der Hinterleuchtung (Tageslicht, Umgebungslicht, o.ä.) durch diese Bereiche hindurchgelassen wird.

Insbesondere kann es auch vorteilhaft sein, innerhalb beider Sichtflächen jeweils mindestens eine Leuchtfläche auszubilden. In diesem Fall leuchtet die Beleuchtungsvorrichtung im Betrieb nämlich nach beiden Seiten. So ist es beispielsweise im Falle einer Außenfensteranwendung möglich, auf der dem Innenraum zugewandten Sichtfläche der Beleuchtungsvorrichtung eine Raumbeleuchtung zu realisieren und auf der nach Außen gewandten Sichtfläche eine Leuchtreklame, ein Hinweiszeichen oder einen sonstigen leuchtenden Informationsgehalt.

Für einen in der Praxis geeigneten Kompromiß zwischen der Funktion als Fenster einerseits und der Funktion als Lampe im Betrieb anderseits ist es ratsam, das Verhältnis zwischen der gesamten Leuchtfläche und dem gesamten transparenten bzw. durchscheinenden Teil der jeweiligen Sichtfläche geeignet aufeinander abzustimmen. Die Notwendigkeit dieses Kompromisses ist allerdings hinfällig sofern es gelingt, die bzw. jede integrierte Lichtquelle der erfindungsgemäßen Beleuchtungsvorrichtung ebenfalls zumindest teilweise transparent auszuführen. Dann wirken nämlich die Bereiche der Lichtquelle, die im Betrieb als Leuchtfläche wirken, im ausgeschalteten Zustand ebenfalls als transparente bzw. durchscheinende Teile der beiden Sichtflächen, d.h. gegebenenfalls wirkt dann die gesamte Sichtfläche der flachen Beleuchtungsvorrichtung als Fenster. Dieser Aspekt wird weiter unten nochmals aufgegriffen.

In jedem Fall ist es vorteilhaft die Anzahl, Abmessungen sowie Verteilung der integrierten Lichtquellen und folglich der Leuchtflächen gezielt zu wählen derart, daß im Betrieb eine dem Tageslicht ähnliche Raumlichtverteilung erzeugt werden kann.

In diesem Zusammenhang haben sich unter anderem streifenförmige Lichtquellen im Wechsel mit ebenfalls streifenförmigen transparenten oder durchscheinenden Bereichen als geeignet erwiesen. Ansonsten eignen sich aber auch die verschiedensten Formen. Der Vorstellung sind diesbezüglich allenfalls durch ästhetische Gesichtspunkte und Überlegungen zur wirtschaftlichen Herstellbarkeit gewisse Grenzen gesetzt. Jedenfalls eignen sich unter anderem kreisförmige oder zumindest kreisähnliche, z.B. ovale oder elliptische sowie rechteckige, rautenförmige, sechseckige oder ähnlich geformte Lichtquellen, die innerhalb der beiden Sichtflächen verteilt angeordnet sind und an die sich transparente Bereiche anschließen. Für weitere Details hierzu wird auf die Ausführungsbeispiele verwiesen.

Für die bzw. jede integrierte Lichtquelle eignet sich beispielsweise eine geeignet geformte flache, abgeschlossene elektrische Lampe, z.B. eine flache Gasentladungslampe.

In einer bevorzugten Ausführung ist die bzw. jede elektrische Lampe als flache Gasentladungslampe mit dielektrisch behinderten Elektroden ausgebildet. Dieser Lampentyp weist nämlich ein mit einer ionisierbaren Füllung, z.B. Xenon, gefülltes zumindest teilweise transparentes flaches Entladungsgefäß mit einer Grundplatte und einer Frontplatte auf, die typisch aus einem zumindest im wesentlichen durchsichtigen Isolierstoff, beispielsweise Glas, bestehen. Auf der Grund- und/oder Frontplatte sind dielektrisch behinderte Elektrodenbahnen angeordnet derart, daß im Betrieb die Frontplatte als Leuchtfläche wirkt.

Für die erfindungsgemäße Verwendung sind die einzelnen Flachlampen auf der Glasplatte eines Fensters angeordnet oder auch zwischen den beiden Glasplatten eines Doppelfensters. Jedenfalls entspricht im Betrieb die Frontplatte (einseitig leuchtend) und optional auch zusätzlich die Grundplatte (beidseitig leuchtend) jeder Flachlampe einer Leuchtfläche. Für weitere Details betreffend den Aufbau derartiger Flachlampen wird auf die Schrift WO 98/43277 verwiesen. Die sich an die flächenhafte Ausdehnung der Front- oder Grundplatte jeder Flachlampe anschließenden Bereiche der Glasplatte des Fensters bzw. der beiden Glasplatten im Fall des Doppelfensters fungieren als transparente Bereiche innerhalb der beiden Sichtflächen der Anordnung. Dadurch ist sichergestellt, daß das Licht einer Hinterleuchtung, beispielsweise Tageslicht, durch diese Bereiche hindurchtreten und auf diese Weise zur Gesamtleuchtwirkung der Beleuchtungsvorrichtung beitragen kann.

Der Vorteil dieser Ausführung ist unter anderem der modulare Aufbau, der sich prinzipiell für Fenster mit nahezu beliebigen Abmessungen skalieren läßt. Ferner ist der Bedarf teuerer Füllgase, im Beispiel Xenon, auf die Innenvolumina der relativ kompakten Entladungsgefäße der einzelnen Lampenmodule beschränkt.

Eine weitere bevorzugte Variante betrifft ein modifiziertes Doppelfenster, bei dem die beiden Glasplatten gleichzeitig als Grund- bzw. Frontplatte einer einzigen Flachlampe wirken. Die Abmessungen der Flachlampe entsprechen also im wesentlichen jenen der Glasplatten des modifizierten Doppelfensters. Die vordere und hintere Sichtfläche der Beleuchtungsvorrichtung ist folglich durch die Außenwandung der Front- bzw. Grundplatte gebildet. Die beiden Glasplatten sind gasdicht zu einem Entladungsgefäß verbunden, beispielsweise mit Hilfe eines umlaufenden Rahmens zwischen den beiden Platten. Die einzelnen Lichtquellen sind dadurch realisiert, daß auf der Grund- und/oder Frontplatte Gruppen von Elektrodenbahnen angeordnet sind, beispielsweise mittels herkömmlicher Drucktechnik. Auf diese Weise ist die gesamte Lampe gleichsam in mehrere Segmente unterteilt, die jeweils als Lichtquellen wirken. Die Form der bzw. jeder Leuchtfläche entspricht im wesentlichen jener der korrespondierenden Elektrodengruppe. Letztere läßt sich auf einfache, an sich bekannte Weise, beispielsweise mittels aus der Dünn- bzw. Dickfilmtechnik bekannten Druckprozessen, auf nahezu jede gewünschte Flächenform bringen. Die die Lampensegmente umgebenden Teilbereiche wirken wie ein herkömmliches Fenster, d.h. sie sind für Tageslicht (oder allgemein Hintergrundlicht) transparent. Idealerweise bestehen die transparenten Bereiche aus Glas oder einem anderen ähnlich transparenten Isolierstoff, um das hindurchtretende Hintergrundlicht möglichst wenig zu schwächen. Allerdings ist die Erfindung dahingehend verallgemeinert zu betrachten, daß auch weniger gut transparente Materialien, beispielsweise matt durchscheinende Materialien, mit eingeschlossen sind.

Die einzelnen Elektrodengruppen können auch getrennt ansteuerbar sein, beispielsweise für einen Dimmbetrieb, Blinkfunktion oder andere visuelle Lichteffekte.

Jedenfalls ist der bzw. jeder Bereich der Frontplatte, der im Betrieb als Leuchtfläche vorgesehenen ist, mit einer Leuchtstoffschicht versehen. Zur Erhöhung der Leuchtdichte auf der Frontplatte kann der bzw. jeder Bereich der Grundplatte, der durch Projektion eines mit Leuchtstoff beschichteten Bereichs auf der Frontplatte entsteht, eine lichtreflektierende Schicht aufweisen.

Der Vorteil dieser Variante ist die relativ einfache Herstellbarkeit mit relativ wenigen Fertigungsschritten, da es sich hier nicht wie vorstehend um einzeln zu fertigende, abgeschlossene Lampenmodule, sondern eben um einzelne gleichartige Segmente einer einzigen Lampe handelt. Hierfür ist beispielsweise die bereits erwähnte und flächenmäßig gut skalierbare Drucktechnik gut geeignet, bei der sämtliche Elektrodengruppen der gesamten Fensterplatte mittels eines einzigen Druckprozesses aufgebracht werden. Nachteilig ist allerdings, daß aufgrund des vergleichsweise großen Volumens des Doppelfenster-Entladungsgefäßes die benötigte Menge an unter Umständen teuerem Füllgas, z.B. Xenon, ebenfalls relativ groß ist. Für weitere Details hinsichtlich Flachlampen mit dielektrisch behinderten Elektrodengruppen wird auf die Schrift EP 0 926 705 A1 verweisen.

Nach dem gegenwärtigen Stand der Entwicklung sind mit derartigen Flachlampen auf der Basis dielektrisch behinderter Entladungen Lichtausbeuten von ca. 28 lm/W und Lichtstärken pro elektrischer Leistung ("Efficiency") von ca. 10 cd/W realisierbar. Je nach angestrebter Leuchtdichte der Leuchtfläche sowie gewünschtem, von der Beleuchtungsvorrichtung abgestrahltem, Lichtstrom läßt sich daraus der erforderliche Anteil der leuchtenden Fläche an der gesamten Sichtfläche abschätzen.

Die nachfolgende Tabelle 1 soll dies verdeutlichen, wobei außer den vorgenannten Werten für die Lichtausbeute und "Efficiency" eine Beleuchtungsvorrichtung mit einer Sichtfläche von 1 m² (entspricht 100 %) sowie einer Leuchtdichte von 5000 cd/m² (d.h. weitgehend blendfrei und deshalb für Innenraumbeleuchtung geeignet) zugrunde gelegt ist.

**Tabelle 1**

| **Anteil der leuchtenden Fläche in %** | **Lichtstrom in Im** | **elektrische Leistungs-aufnahmen in W** |
|---|---|---|
| 99 | 13860 | 495 |
| 50 | 7000 | 250 |
| 10 | 1400 | 50 |
| 1 | 140 | 5 |

Wie der Vergleich mit dem Lichtstrom einer 100 W Glühlampe von typisch 1380 Im zeigt, sind in der Praxis Leuchtflächenanteile von mehr als 1 %, typisch mindestens einige Prozent erforderlich, um jedenfalls ein adäquates Beleuchtungsniveau in Innenräumen sicherzustellen. Auf der anderen Seite ist der transparente Teil in der Regel nicht kleiner als 1 %, typisch nicht weniger als einige Prozent, weil sonst der Anteil des hindurchtretenden Lichts der Hintergrundbeleuchtung (Tageslicht, Umgebungslicht, Beleuchtung eines Nebenraums etc.) zu gering ist. Eine Ausnahme bildet hier die Variante, in der die Leuchtflächen, Elektroden und sonstige Lampenbestandteile selbst ebenfalls (teil-)transparent sind. In diesem Fall kann prinzipiell die gesamte Sichtfläche als transparente Leuchtfläche ausgebildet sein. Auch dann ist die eingangs erwähnte Doppelfunktion der Beleuchtungsvorrichtung erfüllt.

Die nachfolgende Tabelle 2 bezieht sich auf eine angestrebte Leuchtdichte von ca. 7000 cd/m2, wie sie für Außenanwendungen, beispielsweise Reklamezwecke geeignet ist.

**Tabelle 2**

| **Anteil der leuchtenden Fläche in %** | **Lichtstrom in Im** | **elektrische Leistungs-aufnahmen in W** |
|---|---|---|
| 50 | 9800 | 350 |
| 10 | 1960 | 70 |

### Beschreibung der Zeichnungen

Im folgenden soll die Erfindung anhand mehrerer Ausführungsbeispiele näher erläutert werden. Es zeigen:
- Figur 1: ein für die erfindungsgemäße Verwendung vorgesehenes erstes Ausführungsbeispiel einer teiltransparenten Beleuchtungsvorrichtung mit streifenförmigen Leuchtflächen,
- Figur 2: ein weiteres Ausführungsbeispiel einer teiltransparenten Beleuchtungsvorrichtung mit kreisförmigen Leuchtflächen,
- Figur 3a: eine schematisierte Draufsicht eines weiteren Ausführungsbeispiels mit quadratischen Leuchtflächen,
- Figur 3b: ein schematisierter Querschnitt der Figur 3a entlang der Linie AA,
- Figur 4: ein Elektrodendesign für das Ausführungsbeispiel aus Figur 1,
- Figur 5: ein weiteres Ausführungsbeispiel in Form eines Mosaikfensters,
- Figur 6a: eine schematisierte Draufsicht einer Variante zu Figur 3a,
- Figur 6b: ein schematisierter Querschnitt der Figur 6a entlang der Linie AA.

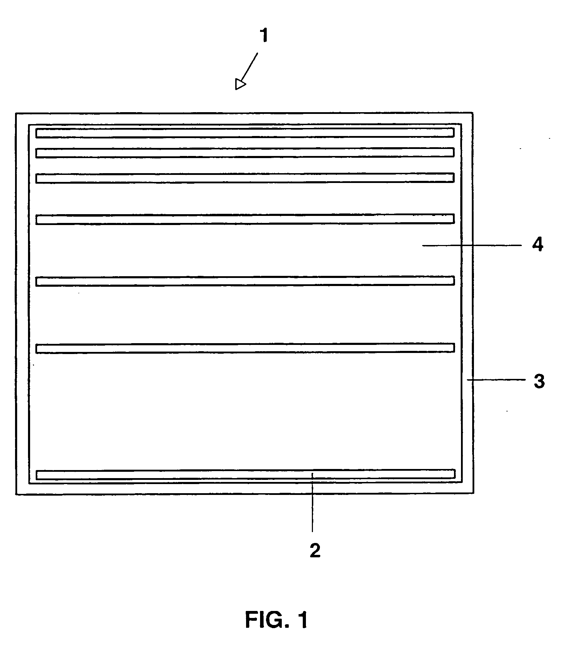

Figur 1 zeigt in schematischer Darstellung ein Substitut eines Fensters in Form einer erfindungsgemäßen teiltransparenten Beleuchtungsvorrichtung 1 mit insgesamt sieben streifenförmigen Leuchtflächen 2 und einem Einbaurahmen 3. Der gegenseitige Abstand der horizontal orientierten Leuchtstreifen 2 wird nach oben hin, d.h. in Einbaulage in Richtung Raumdecke betrachtet, sukzessive kleiner. Dies hat den Vorteil, daß in der primären Blickrichtung aus dem Fenster, typisch etwa die untere Fensterhälfte, der transparente Anteil an der Sichtfläche relativ groß und damit der Durchblick weitgehend ungehindert ist. Außerdem sind die Leuchtstreifen 2 im Vergleich zu den jeweils dazwischen liegenden transparenten Bereichen 4 relativ schmal. Auf der anderen Seite ermöglicht die nach oben, Richtung Decke, höhere Streifendichte eine dem typischen Tageslichteinfall ähnliche Lichtstärkeverteilung im Raum, die evtl. durch ergänzende Reflektorelemente im oberen Teil bzw. oberhalb des "Fensters" noch weiter gezielt verändert werden kann. Zudem kann es vorgesehen sein, daß die Leuchtstreifen 2 getrennt elektrisch schaltbar sind, um die Leuchtstärke den tatsächlichen Erfordernissen flexibel anpassen zu können. In einer nicht dargestellten Variante weisen sowohl die innere als auch die äußere Sichtfläche der teiltransparenten Beleuchtungsvorrichtung 1 Leuchtflächen 2 auf, d.h. die Beleuchtungsvorrichtung 1 leuchtet in diesem Fall nicht nur in Richtung Innenraum, sondern nach beiden Seiten der Fensterebene.

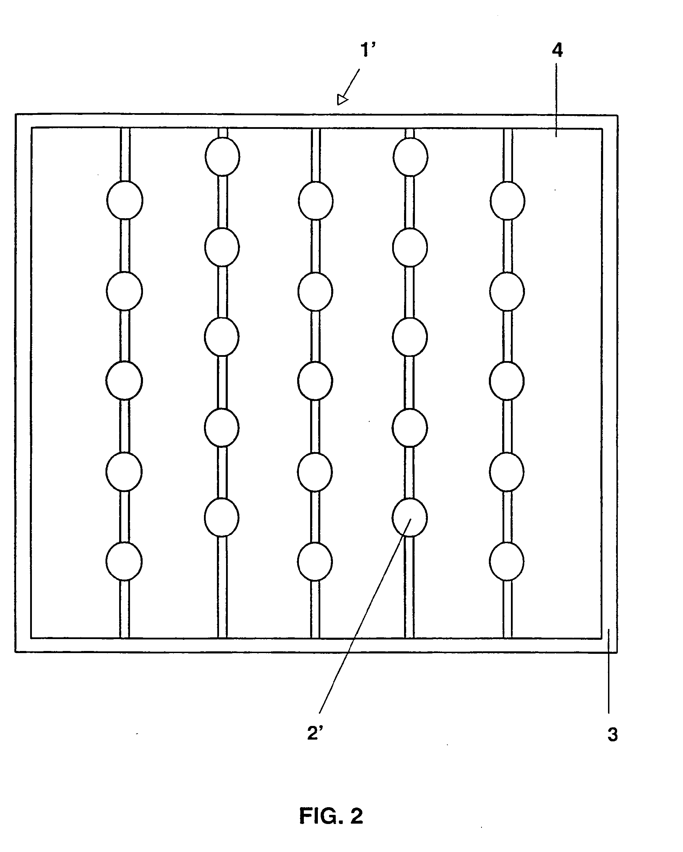

Figur 2 zeigt in schematischer Darstellung ein weiteres Substitut eines Fensters. Hier sind gleichartige Merkmale mit gleichen Bezugsziffern versehen. Die Leuchtflächen 2' sind hier oval und spaltenweise elektrisch schaltbar. Der Durchmesser jeder Leuchtfläche 2' ist im Vergleich zu den Abmessungen des "Fensters" 1' klein, so daß der Durchblick nach draußen relativ wenig gestört ist. Außerdem sind die kreisförmigen Leuchtflächen 2' gleichförmig über die innere Sichtfläche des Fenstersubstituts verteilt, so daß ein möglicherweise störender "Streifeneffekt" wie in der Figur 1 vermieden wird. Auf die äußere Sichtfläche (nicht dargestellt) ist in den Bereichen, welche den Leuchtflächen 2' gegenüber liegen, eine reflektierende Schicht aufgedampft. Auf diese Weise leuchtet das Fenstersubstitut nur in den Innenraum und nicht nach Außen. Das hat den Vorteil, daß sich der Wirkungsgrad hinsichtlich der Innenraumbeleuchtung verbessert.

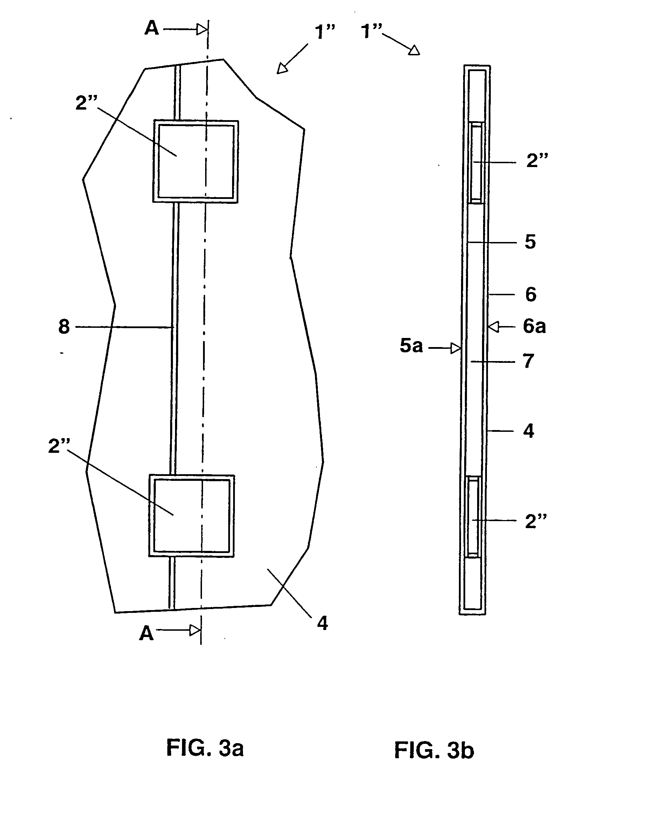

Die Figuren 3a und 3b zeigen auszugsweise eine schematisierte Draufsicht bzw. einen Querschnitt entlang der Linie AA eines weiteren Ausführungsbeispiels 1" mit quadratischen Leuchtflächen 2". Es handelt sich hierbei um einzelne Flachlampen mit dielektrisch behinderten Elektroden von dem beispielsweise in der bereits zitierten WO 98/43277 offenbarten Typ. Die mit Xenon gefüllten Flachlampen 2" sind zwischen den beiden Glasplatten 5, 6 eines Doppelfensters angeordnet. Das Innere 7 des Doppelfensters kann ebenfalls mit einem Gas oder Gasgemisch gefüllt sein, beispielsweise mit getrockneter Luft, oder auch evakuiert sein. Die Flachlampen 2" einer Reihe sind mittels Zuleitungen 8 miteinander verbunden und reihenweise ansteuerbar. Im Betrieb dienen die Flachlampen 2" als Leuchtflächen innerhalb der durch die Außenflächen 5a, 6a der beiden Glasplatten 5, 6 definierten Sichtflächen. Durch die Verwendung einzelner abgeschlossener Flachlampen beschränkt sich die relativ teuere Xenon-Füllung auf das Innere dieser Lampen und nicht auf den deutlich größeren Innenraum des eigentlichen Doppelglasfensters.

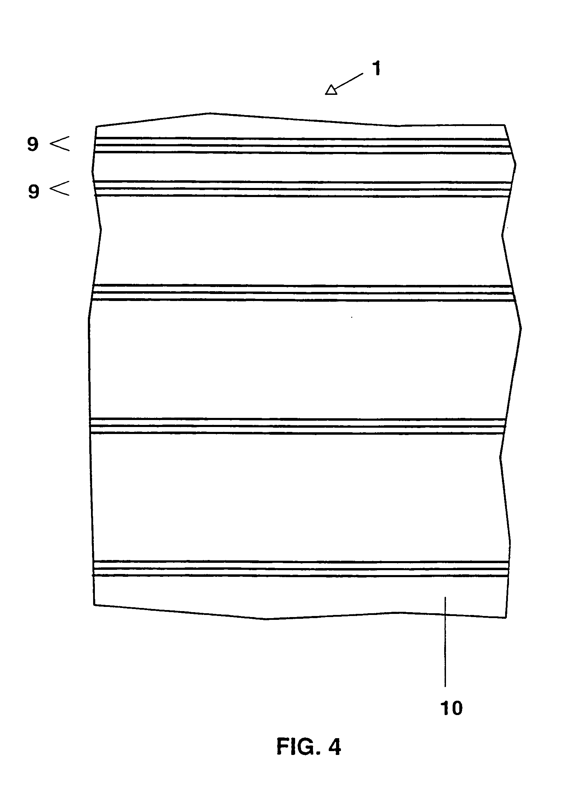

Figur 4 zeigt auszugsweise die Elektrodenkonfiguration des Ausführungsbeispiels aus Figur 1. Dabei sind jeweils drei nach dem Siebdruckverfahren auf die erste Glasplatte des Doppelfensters, der Grundplatte, aufgedruckte parallele Elektrodenbahnen zu streifenförmigen Elektrodengruppen 9 zusammengefaßt. Diese sind mit einer Glasbarriere als Dielektrikum beschichtet (nicht dargestellt). Zwischen benachbarten Elektrodenbahnen unterschiedlicher Polarität bilden sich im bevorzugten unipolaren oder bipolaren Impulsbetrieb gemäß der Schrift EP 0 733 266 B1 eine Vielzahl einzelner Teilentladungen aus (nicht dargestellt). Die zu den Elektrodengruppen 9 korrespondierenden streifenförmigen Teilbereiche der zweiten Glasplatte, der Frontplatte, ist mit Leuchtstoff beschichtet. Diese streifenförmigen Teilbereiche wirken im Lampenbetrieb dann als die in Figur 1 dargestellten streifenförmigen Leuchtflächen 2. Zwischen den Leuchtflächen 2 ist die Frontplatte unbeschichtet, d.h. glasklar. Dies gilt in gleicher Weise für die korrespondierenden Bereiche 10 zwischen den Elektrodengruppen 9. Dadurch kann das Hintergrundlicht, z.B. Tageslicht, zwischen den Elektrodengruppen 9 bzw. Leuchtflächen 2 weitgehend ungehindert hindurchtreten. In dieser Hinsicht wirkt die erfindungsgemäße teiltransparente flache Beleuchtungsvorrichtung wie ein konventionelles Fenster. Der Abstand zwischen den beiden Glasplatten beträgt etwa 3 bis 5 mm, wobei sie als Dichtung über einen den Au-ßenrand des Entladungsvolumens bildenden Glasrahmen mit Glaslot verbunden sind (nicht dargestellt). Das so dicht eingeschlossene Entladungsvolumen enthält als Entladungsfüllung eine Xe-Füllung bei etwa 100 mbar (= 10 kPa). Für weitere Details hinsichtlich Flachlampen mit Elektrodengruppen wird auf die EP 0 926 705 A1 verwiesen.

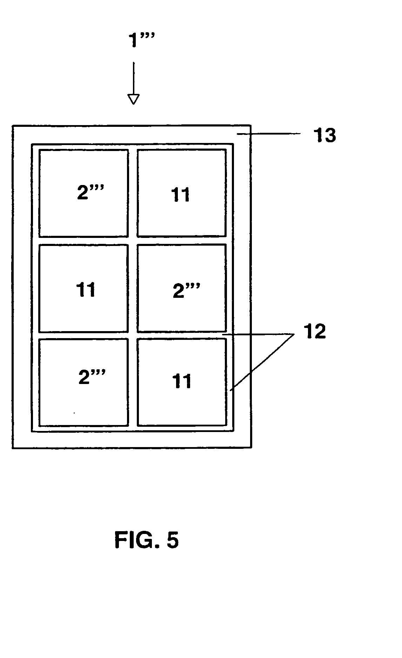

Figur 5 zeigt als weiteres Ausführungsbeispiel ein mosaikartiges Fenstersubstitut 1*"'* in schematischer Darstellung. Es besteht aus drei rechteckigen Flachlampen 2"' und drei ebenso geformten Fenstergläsern 11. Die Dicke der Flachlampen 2"' entspricht mit ca. 7 bis 10 mm ungefähr der Dicke der Fenstergläser 11. Alle sechs Teile 2"', 11 sind an ihren Stoßkanten mittels Bleibändern 12 aneinander gefügt und mit Hilfe eines Einbaurahmens 13 zum Fenstersubstitut 1"' gerahmt. Die Flachlampen 2"' bilden im Betrieb die Leuchtflächen, während die Fenstergläser 11 die transparenten Teile des Fenstersubstituts 1"' bilden. Die Vorder- und Rückseite der Gesamtheit der Flachlampen 2"' und Fenstergläser 11 bilden die beiden Sichtflächen. Aus dekorativen Gründen können die Fenstergläser 11 und/ oder die Flachlampen 2"' auch gefärbt sein, beispielsweise auch unterschiedlich. Außerdem können die Einzelteile auch anders als rechteckig, beispielsweise rautenförmig, sechseckig o.ä. geformt sein. Wesentlich ist in dieser Hinsicht nur, daß sich die Einzelteile zu einem Fenstersubstitut 1"' zusammenfügen lassen.

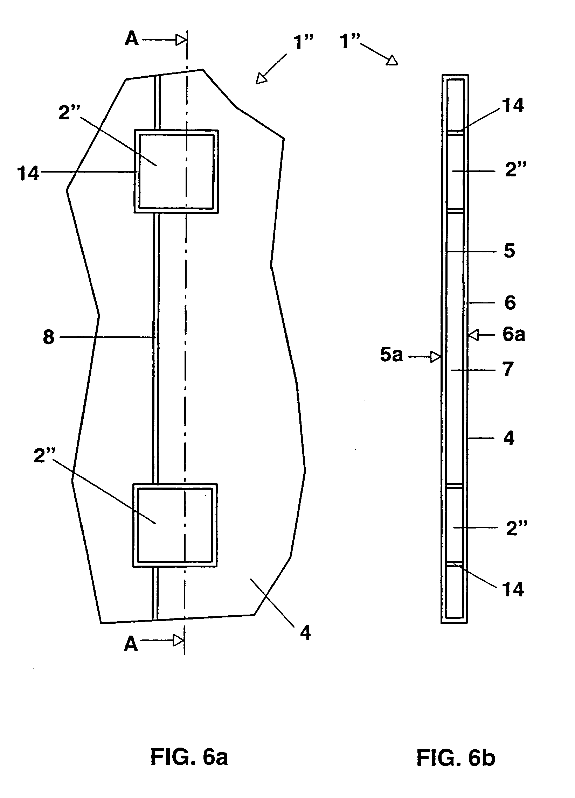

Die Figuren 6a, 6b zeigen eine Variante des in den Figuren 3a, 3b dargestellten Ausführungsbeispiels. Gleiche Merkmale sind wiederum mit den gleichen Bezugszeichen bezeichnet. Hier ist das Entladungsgefäß jeder mit Xenon gefüllten Flachlampe 2" dadurch gebildet, daß zwischen den beiden Fensterplatten 5, 6 jeweils ein rechteckig umlaufender Rahmen 14 eingepaßt ist. Der Leuchtstoff und die Elektroden sind dann direkt auf den Innenwandungen der Fensterplatten 5, 6 innerhalb des durch den Rahmen umschlossenen Bereichs aufgebracht (nicht dargestellt). Auf diese Weise kann jeweils auf die zusätzliche Grund- und Frontplatte des Entladungsgefäßes einer Flachlampe gemäß Figur 3a, 3b verzichtet werden. Ansonsten sind die Details der Ausführung analog zu Figur 3a, 3b. Ergänzend wird auf die bereits mehrfach zitierte WO 98/43277 verwiesen.

In einer Weiterbildung sind die verwendeten Materialien zumindest durchscheinend, so daß im wesentlichen die gesamten Sichtflächen der flachen Beleuchtungsvorrichtung auch als Fenster wirken können. Beispielsweise ist es denkbar, für die Elektrodenbahnen durchsichtige elektrisch leitfähige Schichten, z.B. aus Indium-Zink-Oxid (ITO), zu verwenden. Außerdem kann die Leuchtstoffschicht sehr dünn ausgeführt sein, so daß die Bereiche der Lichtsegmente zumindest trüb durchscheinend sind.

## Patentansprüche

1. Verwendung einer flachen Beleuchtungsvorrichtung (1-1"') mit
• zwei einander gegenüberstehenden zumindest teilweise transparenten Sichtflächen (5a, 6a) derart, daß Licht einer die Beleuchtungsvorrichtung hinterleuchtenden Lichtquelle durch den transparenten Teil (4) der Sichtflächen hindurchtreten kann,
• mindestens einer integrierten Lichtquelle, wobei die bzw. jede Lichtquelle derart angeordnet ist, daß durch die bzw. jede Lichtquelle eine entsprechende Leuchtfläche (2-2"') innerhalb zumindest einer der beiden Sichtflächen definiert ist und wobei an die bzw. jede Leuchtfläche (2; 2"') ein transparenter Teil (4; 11) der Sichtfläche angrenzt,
als Außen- oder Innenfenster eines Gebäudes.

2. Verwendung nach Anspruch 1, wobei die bzw. jede Lichtquelle und folglich die korrespondierende Leuchtfläche (2) streifenförmig ist.

3. Verwendung nach Anspruch 2, wobei im Falle mehrerer streifenförmiger Lichtquellen deren gegenseitiger Abstand in Richtung einer Kante der Sichtfläche betrachtet kleiner ist als in der entgegengesetzten Richtung betrachtet.

4. Verwendung nach Anspruch 1, wobei die bzw. jede elektrische Lichtquelle und folglich die korrespondierende Leuchtfläche kreisförmig (2') oder rechteckig (2") ist.

5. Verwendung nach einem der vorstehenden Ansprüche, wobei die bzw. jede Lichtquelle durch eine räumlich abgeschlossene elektrische Lampe (2"; 2"') gebildet ist.

6. Verwendung nach Anspruch 5, wobei die bzw. jede elektrische Lampe als Gasentladungslampe mit dielektrisch behinderten Elektroden ausgebildet ist.

7. Verwendung nach einem der Ansprüche 1 bis 4, wobei die Beleuchtungsvorrichtung ein mit einer ionisierbaren Füllung gefülltes zumindest teilweise transparentes flaches Entladungsgefäß mit einer Grundplatte und einer Frontplatte umfaßt, wobei die beiden Sichtflächen der Beleuchtungsvorrichtung durch die Außenwandungen der Grund- bzw. Frontplatte gebildet sind.

8. Verwendung nach Anspruch 7, wobei auf der Grund- und/oder Frontplatte dielektrisch behinderte Elektrodenbahnen angeordnet sind, die zu als Lichtquellen fungierenden Elektrodengruppen (9) zusammengefaßt sind, wobei die Flächenform dieser Elektrodengruppen im wesentlichen mit der Flächenform der Leuchtflächen korrespondieren.

9. Verwendung nach Anspruch 7, wobei der bzw. jeder Bereich der Frontplatte, der im Betrieb als Leuchtfläche vorgesehenen ist, mit einer Leuchtstoffschicht versehen ist.

10. Verwendung nach Anspruch 7, 8 oder 9, wobei der bzw. jeder Bereich der Grundplatte, der durch Projektion eines mit Leuchtstoff beschichteten Bereichs auf der Frontplatte entsteht, eine lichtreflektierende Schicht aufweist.

11. Verwendung nach einem der vorstehenden Ansprüche, wobei im Fall mehrerer Lichtquellen diese getrennt ansteuerbar sind.

12. Verwendung nach einem der Ansprüche 7 bis 11, wobei die Grund- und Frontplatte aus einem zumindest im wesentlichen durchsichtigen oder zumindest durchscheinenden Isolierstoff, beispielsweise Glas, bestehen.

13. Verwendung nach einem der vorstehenden Ansprüche als Fenster oder Doppelfenster (1").

14. Verwendung nach einem der Ansprüche 1 bis 6 oder 11 bis 12 als Mosaikfenster (1"').

## Claims

1. Use of a flat lighting device (1-1"') having
• two mutually opposite, at least partially transparent view surfaces (5a, 6a) in such a way that light from a light source backlighting the lighting device can pass through the transparent part (4) of the view surfaces, and
• at least one integrated light source, the, or each, light source being arranged in such a way that a corresponding luminous area (2-2"') is defined inside at least one of the two view surfaces by the, or each, light source, and a transparent part (4; 11) of the view surface adjoins the, or each, luminous area (2; 2"')
as an outer or inner window of a building.

2. Use according to Claim 1, in which the, or each, light source, and consequently the corresponding luminous area (2), is strip-shaped.

3. Use according to Claim 2, in which in the case of a plurality of strip-shaped light sources, their mutual spacing considered in the direction of an edge of the view surface is smaller than when considered in the opposite direction.

4. Use according to Claim 1, in which the, or each, electric light source, and consequently the corresponding luminous area, is circular (2') or rectangular (2").

5. Use according to one of the preceding claims, in which the, or each, light source is formed by a spatially closed electric lamp (2" ; 2"').

6. Use according to Claim 5, in which the, or each, electric lamp is designed as a gas discharge lamp with dielectrically impeded electrodes.

7. Use according to one of Claims 1 to 4, in which the lighting device comprises an at least partially transparent flat discharge vessel which is filled with an ionizable filling and has a baseplate and a front plate, the two view surfaces of the lighting device being formed by the outer walls of the baseplate or front plate.

8. Use according to Claim 7, in which there are arranged on the baseplate and/or front plate dielectrically impeded electrode tracks which are combined to form electrode groups (9) functioning as light sources, the flat shape of these electrode groups substantially corresponding to the flat shape of the luminous areas.

9. Use according to Claim 7, in which the, or each, region of the front plate which is provided as a luminous area during operation is provided with a fluorescent layer.

10. Use according to Claim 7, 8 or 9, in which the, or each, region of the baseplate which is produced on the front plate by projecting a region, coated with fluorescent material, has a light-reflecting layer.

11. Use according to one of the preceding claims, in which in the case of a plurality of light sources the latter can be driven separately.

12. Use according to one of Claims 7 to 11, in which the baseplate and front plate consist of an insulant, for example glass, which is at least substantially transparent or at least translucent.

13. Use according to one of the preceding claims as a window or double window (1").

14. Use according to one of Claims 1 to 6 or 11 to 12 as a mosaic window (1"').

## Revendications

1. Utilisation d'un dispositif (1 à 1"') d'éclairage plat comprenant
• deux surfaces (5a, 6a) de vue opposées l'une à l'autre et au moins en partie transparentes de façon à ce que de la lumière d'une source lumineuse éclairant par l'arrière le dispositif d'éclairage puisse passer à travers la partie (4) transparente des surfaces de vue,
• au moins une source lumineuse intégrée, la ou chaque source lumineuse étant disposée de façon à ce que soit défini par la ou par chaque source lumineuse une surface (2 à 2*'''*) d'éclairage correspondante à l'intérieur d'au moins l'une des deux surfaces de vue, et une partie (4 ; 11) transparente de la surface de vue étant voisine de la ou de chaque surface (2 ; 2"') d'éclairage,
comme fenêtre extérieure ou intérieure d'un bâtiment.

2. Utilisation suivant la revendication 1, dans laquelle la ou chaque source lumineuse et, en conséquence, la surface (2) d'éclairage correspondante est en forme de bande.

3. Utilisation suivant la revendication 2, dans laquelle, dans le cas de plusieurs sources lumineuses en forme de bande, leur distance mutuelle considérée dans le sens d'un bord de la surface de vue est plus petite que dans le sens opposé.

4. Utilisation suivant la revendication 1, dans laquelle la ou chaque source lumineuse électrique et, en conséquence, la surface d'éclairage correspondante est circulaire (2') ou rectangulaire (2").

5. Utilisation suivant l'une des revendications précédentes, dans laquelle la ou chaque source lumineuse est formée par une lampe (2" ; ; 2"') électrique fermée dans l'espace.

6. Utilisation suivant la revendication 5, dans laquelle la ou chaque lampe électrique est constituée sous la forme d'une lampe à décharge dans un gaz ayant des électrodes à décharge rendues incomplètes par voie diélectrique.

7. Utilisation suivant l'une des revendications 1 à 4, dans laquelle le dispositif d'éclairage comprend une enceinte de décharge emplie d'une atmosphère ionisable au moins en partie transparente, plate et ayant une plaque de base et une plaque avant, les deux surfaces de vue du dispositif d'éclairage étant formées par les parois extérieures de la plaque de fond et de la plaque avant.

8. Utilisation suivant la revendication 7, dans laquelle il est apposé sur la plaque de fond et/ou la plaque avant des bandes d'électrodes pour décharges rendues incomplètes par voie diélectrique qui sont rassemblées en des groupements d'électrodes servant de sources lumineuses, la forme de surface de ces groupes d'électrodes correspondant sensiblement à la forme de surface des surfaces d'éclairage.

9. Utilisation suivant la revendication 7, dans laquelle la ou chaque partie de la plaque avant qui est prévue en fonctionnement comme surface d'éclairage est munie d'une couche de substance luminescente.

10. Utilisation suivant la revendication 7, 8 ou 9, dans laquelle la ou chaque partie de la plaque de fond qui est formée par projection sur la plaque avant d'une partie revêtue de substance luminescente a une couche réfléchissant la lumière.

11. Utilisation suivant l'une des revendications précédentes, dans laquelle, dans le cas de plusieurs sources lumineuses, celles-ci peuvent être commandées séparément.

12. Utilisation suivant l'une des revendications 7 à 11, dans laquelle la plaque de fond et la plaque avant sont en une substance isolante au moins sensiblement transparente ou au moins translucide, par exemple en verre.

13. Utilisation suivant l'une des revendications précédentes en tant que fenêtre ou contre-fenêtre (1").

14. Utilisation suivant l'une des revendications 1 à 6 ou 11 à 12 en tant que fenêtre (1"') mosaïque.
